# EUROPÄISCHE PATENTSCHRIFT

(11) **EP 3 661 803 B1**
(45) Veröffentlichungstag und Bekanntmachung des Hinweises auf die Patenterteilung: **02.06.2021**
(21) Anmeldenummer: 18740794.5
(22) Anmeldetag: 12.07.2018
(51) Int. Cl.: B60N 2/02, B60N 2/06, B60N 2/07, B60N 2/14, B60N 2/10, B60N 2/005

(54) **KRAFTFAHRZEUG MIT WENIGSTENS EINEM FAHRZEUGSITZ**
MOTOR VEHICLE HAVING AT LEAST ONE VEHICLE SEAT
VÉHICULE À MOTEUR POURVU D'AU MOINS UN SIÈGE DE VÉHICULE

(30) Priorität: 05.08.2017 DE 102017007418
(43) Veröffentlichungstag der Anmeldung: 10.06.2020
(73) Patentinhaber: Audi AG, 85045 Ingolstadt (DE)
(72) Erfinder: HESSE, Alexander, 85113 Böhmfeld (DE); TOVAR, Johannes, 85049 Ingolstadt (DE); GAGULA, Viola Evelyn, 85051 Ingolstadt (DE); MAUL, Stefan, 85080 Gaimersheim (DE)
(86) Internationale Anmeldenummer: PCT/EP2018/068867
(87) Internationale Veröffentlichungsnummer: WO 2019/029939

(56) Entgegenhaltungen:
- EP-A1- 2 514 630
- WO-A1-2010/067437
- DE-A1-102014 223 192
- DE-T2- 69 202 551
- JP-A- 2003 118 438

## Beschreibung

Die Erfindung betrifft ein Kraftfahrzeug mit wenigstens einem Fahrzeugsitz, welcher ein Sitzteil, eine Lehne und eine erste Verstelleinrichtung umfasst. Mittels der ersten Verstelleinrichtung ist zumindest das Sitzteil entlang wenigstens einer Schiene in Längsrichtung des Kraftfahrzeugs verfahrbar. Der Fahrzeugsitz umfasst eine zweite Verstelleinrichtung zum Drehen zumindest des Sitzteils um eine Hochachse des Fahrzeugsitzes.

Derartige, drehbare Fahrzeugsitze kommen beispielsweise bei Vans in einer zweiten Sitzreihe oder dritten Sitzreihe zum Einsatz. Des Weiteren kann etwa bei Wohnmobilen auch ein Fahrzeugsitz einer ersten Sitzreihe um die Hochachse drehbar ausgebildet sein.

Die JP 2003 118438 A beschreibt einen faltbaren Fahrzeugsitz, welcher entlang einer ersten Führungsschiene bis unter eine Instrumententafel eines Kraftahrzeugs und im gefalteten Zustand entlang einer zweiten Führungsschiene unterhalb der Instrumententafel verschiebbar ist.

Die DE 692 02 551 T2 offenbart ein weiteres Beispiel von einem drehbaren Sicherheitstraggestell zur Drehung eines Sitzes in einem Kraftfahrzeug.

Bei Kraftfahrzeugen rückt zudem das teilautonome und das vollautonome Fahren aufgrund erheblicher Fortschritte im Bereich der Fahrzeugentwicklung immer mehr in den Mittelpunkt. Daraus ergeben sich Schwierigkeiten bei der Verwendung von Baukastenkomponenten, welche bisher noch nicht vollständig gelöst sind. Beispielsweise kann bei einem Kraftfahrzeug vorgesehen sein, dass bei diesem gewählt werden kann, ob das Kraftfahrzeug (hochautomatisiert) selbst fährt oder gefahren wird. Auch beim hochautomatisierten Fahren ist jedoch vorgesehen, dass bei Bedarf ein Fahrer des Kraftfahrzeugs wieder die Führung des Kraftfahrzeugs übernimmt. Beim vollautomatisierten Fahren wird die Führung des Kraftfahrzeugs dauerhaft von einem entsprechenden System des Kraftfahrzeugs übernommen. Jedoch kann auch hier der Fahrer aufgefordert werden, die Führung zu übernehmen, wenn das System Fahraufgaben nicht mehr bewältigen kann.

Insbesondere beim teilautonomen oder vollautonomen Fahren des Kraftfahrzeugs ergeben sich neue Anforderungen an den Fahrzeugsitz. So kann der Anspruch des Fahrers bestehen, dass dieser unterschiedliche Sitzpositionen einnehmen will. Dies kann eine Änderung der bisherigen Sitzstruktur erforderlich machen. Sobald jedoch eine geänderte Sitzposition beziehungsweise eine Verstellposition des Fahrzeugsitzes von der Normalposition oder Normalstellung abweicht, lassen sich oft ergonomische Vorgaben, insbesondere hinsichtlich der Durchführung von Bedienhandlungen im Kraftfahrzeug, nicht erfüllen. Damit der Fahrzeugsitz rasch aus seiner Verstellposition wieder in die Normalposition zurück verstellt werden kann, ist eine schnelle Sitzverstellung erforderlich. Dies macht in der Regel eine elektrische Verstellung des Fahrzeugsitzes erforderlich.

Als nachteilig ist hierbei der Umstand anzusehen, dass in der Normalposition beziehungsweise Normalstellung des Fahrzeugsitzes der Fahrer vergleichsweise wenig Beinfreiheit hat. Dies liegt einerseits an den im Fußraum vor dem Fahrersitz vorhandenen Fahrpedalen und andererseits an dem Vorhandensein der Mittelkonsole. Und sobald der Fahrzeugsitz aus der Normalposition in eine Verstellposition bewegt wird, verändern sich auch der Hüftpunkt eines Sitzinsassen und der Sichtstrahl des Sitzinsassen. Des Weiteren kann eine Änderung von Sitzschienen in Bezug auf einen Schweller des Kraftfahrzeugs erforderlich sein, um neue Sitzpositionen zu ermöglichen.

Zudem macht es eine Verstelleinrichtung zum Drehen des Fahrzeugsitzes um seine Hochachse erforderlich, unterhalb des Sitzteils des Fahrzeugsitzes zusätzlichen Bauraum für die Verstelleinrichtung vorzusehen. Der Fahrzeugsitz wird somit höher aufgebaut. Eine zusätzliche Verstellbarkeit des Sitzteils in Form der Drehung um die Hochachse benötigt also mehr Bauraum, etwa weil eine Drehscheibe und ein Antriebsmotor vorzusehen sind. Dies führt jedoch dazu, dass bezogen auf einen Teppich oder ein derartiges Verkleidungselement des Kraftfahrzeugs das Sitzteil des Fahrzeugsitzes erhöht über dem Teppich angebracht ist. Dies kann den Einstieg erschweren. Zudem kann dadurch eine maximale Höhe bis zu einem Himmel des Kraftfahrzeugs verringert sein. Dem kann entgegengewirkt werden, indem ein Exterieur beziehungsweise ein Dachbereich des Kraftfahrzeugs und Fenster des Kraftfahrzeugs so ausgestaltet werden, dass diese weiter nach oben hin aufbauen.

Aufgabe der vorliegenden Erfindung ist es daher, ein verbessertes Kraftfahrzeug der eingangs genannten Art zu schaffen.

Diese Aufgabe wird durch ein Kraftfahrzeug mit den Merkmalen des Patentanspruchs 1 gelöst. Vorteilhafte Ausgestaltungen mit zweckmäßigen Weiterbildungen der Erfindung sind in den abhängigen Patentansprüchen angegeben.

Das erfindungsgemäße Kraftfahrzeug weist wenigstens einen Fahrzeugsitz auf. Der wenigstens eine Fahrzeugsitz umfasst ein Sitzteil, eine Lehne und eine erste Verstelleinrichtung. Mittels der ersten Verstelleinrichtung kann zumindest das Sitzteil entlang wenigstens einer Schiene in die Längsrichtung des Kraftfahrzeugs verfahren werden. Der Fahrzeugsitz umfasst eine zweite Verstelleinrichtung, welche zum Drehen zumindest des Sitzteils um eine Hochachse des Fahrzeugsitzes ausgebildet ist. Hierbei ist die wenigstens eine Schiene in Richtung der Hochachse unterhalb eines Verkleidungselements angeordnet, mittels welchem ein Boden des Kraftfahrzeugs verkleidet ist. Das Verkleidungselement, welches beispielsweise als Teppich ausgebildet sein kann, verdeckt somit die wenigstens eine Schiene. Dies führt dazu, dass sich die wenigstens eine Schiene nicht im Sichtbereich eines Fahrzeuginsassen beziehungsweise einer in das Kraftfahrzeug einsteigenden Person befindet.

Des Weiteren führt das Anordnen der wenigstens einen Schiene unterhalb des Verkleidungselements dazu, dass eine Verschmutzung der wenigstens einen Schiene sehr weitgehend vermieden ist. Dadurch kann langfristig eine zuverlässige und leichtgängige Längsverstellung des Sitzteils mittels der ersten Verstelleinrichtung gewährleistet werden. Dementsprechend ist ein verbessertes Kraftfahrzeug geschaffen.

Des Weiteren baut der Fahrzeugsitz bezogen auf das Verkleidungselement beziehungsweise den Teppich trotz der zusätzlichen Funktion des Drehens des Sitzteils um die Hochachse des Fahrzeugsitzes nicht höher auf. Somit wird auch das Exterieur beziehungsweise der Himmel des Kraftfahrzeugs nicht optisch negativ beeinflusst.

Auch ein einfacher und komfortabler Fahrzeugeinstieg ist trotz des Vorsehens der zweiten Verstelleinrichtung unterhalb des Sitzteils weiterhin gewährleistet. Dadurch, dass sich mittels der zweiten Verstelleinrichtung das komplette Sitzteil um die Hochachse des Fahrzeugsitzes drehen lässt, wird eine Position von Komfortflächen beziehungsweise Anlageflächen des Fahrzeugsitzes für den Körper des Sitzinsassen nicht verändert. Darüber hinaus kann sichergestellt werden, dass eine Rückhaltefunktion eines Sicherheitsgurts des Fahrzeugsitzes ergonomisch gleich bleibt. Mit anderen Worten sorgt der Sicherheitsgurt für das Zurückhalten des Fahrzeuginsassen im Fahrzeugsitz auf eine gleichbleibende Art und Weise, unabhängig davon, ob das Sitzteil und die Lehne um die Hochachse des Fahrzeugsitzes aus der Normalposition beziehungsweise Ausgangsstellung heraus verdreht sind oder nicht.

Es ist vorgesehen, dass die Lehne in einer unveränderbaren Winkelstellung bezogen auf das Sitzteil an dem Sitzteil festgelegt ist. Beispielsweise können wenigstens ein Strukturelement des Sitzteils und wenigstens ein Strukturelement der Lehne unlösbar miteinander verbunden sein, insbesondere miteinander verschweißt sein. Dann bewirkt ein Verstellen der Neigung der Rückenlehne nach hinten zugleich ein Hochlegen der Beine. Der Sitzinsasse kann so sehr rasch eine sehr komfortable Position, insbesondere Ruheposition, einnehmen.

Des Weiteren ist vorgesehen, dass eine Neigung des Sitzteils zusammen mit der an dem Sitzteil festgelegten Lehne mittels einer weiteren Verstelleinrichtung veränderbar ist. So kann die strukturelle Einheit beziehungsweise Baugruppe, welche das Sitzteil und die Lehne umfasst, aus der Normalposition weiter nach hinten gekippt werden. Da hierbei zugleich mit dem Zurückkippen der Lehne das Sitzteil nach oben verkippt wird, lässt sich sehr rasch eine für den Sitzinsassen besonders komfortable Ruheposition erreichen, in welcher auch die Oberschenkel des Sitzinsassen nach oben verkippt sind und somit die Beine angenehm hochgelagert sind.

Bevorzugt ist die erste Verstelleinrichtung in Richtung der Hochachse unterhalb des Verkleidungselements angeordnet. Die Verstelleinrichtung kann etwa einen elektrischen Antrieb und eine Tragstruktur umfassen, welche entlang der wenigstens einen Schiene, insbesondere entlang zweier paralleler Schienen, verfahrbar ist. Wenn derartige Komponenten der ersten Verstelleinrichtung unterhalb des Verkleidungselements angeordnet sind, so befinden sich auch diese Komponenten, welche dem Verstellen des Fahrzeugsitzes entlang der wenigstens einen Schiene dienen, in vorteilhafter Weise nicht im Sichtbereich.

Vorzugsweise umfasst die zweite Verstelleinrichtung einen Antrieb und eine Getriebeeinrichtung. Hierbei ist die Getriebeeinrichtung der zweiten Verstelleinrichtung in Richtung der Hochachse zumindest teilweise unterhalb des Verkleidungselements angeordnet. Der Antrieb kann sich demgegenüber zumindest bereichsweise innerhalb des Sitzteils befinden. Die Getriebeeinrichtung, welche das von dem, insbesondere elektrischen, Antrieb bereitgestellte Drehmoment in die Drehung zumindest des Sitzteils um die Hochachse des Fahrzeugsitzes umsetzt, ist also vorzugsweise unterhalb des Verkleidungselements angeordnet. Auf diese Weise ist sichergestellt, dass sich die Verstelleinrichtungen in einem besonders weitgehenden Ausmaß unter dem Verkleidungselement und somit außerhalb des Sichtbereichs befinden. Demgegenüber können eine, insbesondere zylinderförmige, Stützeinrichtung, welche das Sitzteil abstützt, und eine Drehscheibe oberhalb des Verkleidungselements angeordnet sein.

Vorzugsweise ist die wenigstens eine Schiene auf einem rampenförmigen Trägerteil angeordnet, welches in die Längsrichtung zu einem Heck des Kraftfahrzeugs hin abfällt. Auf diese Weise ist erreichbar, dass es zugleich mit einer Längsverstellung des Sitzteils zu einer Höhenverstellung des Sitzteils kommt. Denn wenn das Sitzteil entlang des wenigstens einen rampenförmigen Trägerteils hin zu einem Frontbereich des Kraftfahrzeugs verfahren wird, vergrößert sich auch der Abstand des Sitzteils vom Boden des Kraftfahrzeugs. Dies ist für einen vergleichsweise kleinen Sitzinsassen vorteilhaft, da dieser in der Regel sowohl eine höhere Sitzposition als auch ein weiter nach vorne verstelltes Sitzteil einzustellen bevorzugt, als dies bei einem größeren Sitzinsassen der Fall ist. Der größere Sitzinsasse kann demgegenüber durch ein Verfahren des Sitzteils hin zum Heck des Kraftfahrzeugs auf besonders einfache Art und Weise zugleich eine niedrigere Sitzposition als auch eine weiter zurückversetzte Position des Sitzteils durch Betätigen der ersten Verstelleinrichtung erreichen. Die Sitzverstellung ist so besonders einfach und komfortabel.

Vorzugsweise ist das Sitzteil nur dann mittels der zweiten Verstelleinrichtung um die Hochachse drehbar, wenn das Sitzteil in die Längsrichtung einen vorbestimmten Abstand von einem vorderen Ende der wenigstens einen Schiene aufweist. So kann sichergestellt werden, dass die komfortable, weil eine gute Beinfreiheit bietende Sitzposition, bei welcher das Sitzteil mittels der zweiten Verstelleinrichtung um die Hochachse gedreht ist, lediglich dann einstellbar ist, wenn das Sitzteil ausreichend weit nach hinten verfahren ist. So kann insbesondere dem Umstand Rechnung getragen werden, dass beim Erreichen des vorbestimmten Abstands von dem vorderen Ende der wenigstens einen Schiene eine Mittelkonsole des Kraftfahrzeugs bei der Drehung um die Hochachse des Fahrzeugsitzes nicht mit den Knien des Sitzinsassen kollidiert beziehungsweise die Knie des Sitzinsassen nicht mit der Mittelkonsole kollidieren. Eine solche Kollisionsvermeidung kann insbesondere dadurch erleichtert werden, dass die Mittelkonsole zum Heck des Kraftfahrzeugs hin eine geringere Höhe aufweist als zur Fahrzeugfront hin. Insbesondere kann vorgesehen sein, dass das Sitzteil nur dann mittels der zweiten Verstelleinrichtung um die Hochachse drehbar ist, wenn das Sitzteil in die Längsrichtung maximal weit entlang der wenigstens einen Schiene nach hinten verfahren ist. Dann ist zugleich eine besonders bequeme Sitzposition für den Fahrzeuginsassen erreichbar.

Die Neigung der an dem Sitzteil festgelegten Lehne kann in der Normalposition etwa 25 Grad bezogen auf eine Fahrzeughochachse des Kraftfahrzeugs beziehungsweise auf die Hochachse des Fahrzeugsitzes betragen. Eine solche Neigung wird von dem Sitzinsassen als komfortabel empfunden, wenn der Sitzinsasse die Normalposition einnimmt. Diese Neigung führt also zu einem hohen Sitzkomfort für den Fahrzeuginsassen sowohl in der Normalposition als auch in einer Ruheposition, welche der Sitzinsasse insbesondere in einem autonomen Fahrmodus des Kraftfahrzeugs einnehmen kann.

Insbesondere kann vorgesehen sein, dass mittels der weiteren Verstelleinrichtung die Neigung des Sitzteils zusammen mit der Lehne um etwa 7 Grad bis etwa 11 Grad, insbesondere um etwa 9 Grad, gegenüber der Normalposition weiter bezogen auf die Fahrzeughochachse verkippt werden kann. Wenn in der Normalposition die Neigung der Lehne bezogen auf die Fahrzeughochachse oder die Hochachse des Fahrzeugsitzes etwa 25 Grad beträgt, so kann in der weiter nach hinten verkippten Stellung der Lehne und des Sitzteils die Neigung der Lehne somit bis zu 32 Grad beziehungsweise bis zu 36 Grad bezogen auf die Fahrzeughochachse betragen. Wenn die Lehne zusammen mit dem Sitzteil maximal weit nach hinten geneigt ist, so beträgt beispielsweise die Neigung der Lehne 34 Grad bezogen auf die Fahrzeughochachse. Dies gilt bei einer Veränderbarkeit der Neigung der Lehne mittels der Verstelleinrichtung von bis zu 9 Grad.

Die weitere Verstelleinrichtung kann insbesondere innerhalb des Sitzteils angeordnet sein, und sie ist somit in Richtung der Hochachse bevorzugt oberhalb des Verkleidungselements angeordnet. Auf diese Weise trägt die weitere Verstelleinrichtung nicht zu einer Beanspruchung von zusätzlichem Bauraum unterhalb des Sitzteils bei.

Vorzugsweise ist das Sitzteil mittels der zweiten Verstelleinrichtung aus einer Ausgangsstellung um die Hochachse hin zu einer Mittelkonsole des Kraftfahrzeugs verdrehbar. Durch ein solches Verdrehen des Sitzteils und der Lehne hin zur Fahrzeugmitte lässt sich in der Ruheposition eine für den Sitzinsassen besonders komfortable Sitzposition erreichen.

Vorzugsweise tritt eine das Sitzteil abstützende Stützeinrichtung durch eine in dem Verkleidungselement ausgebildete Durchtrittsöffnung hindurch. Hierbei sind Mittel zum Schließen der Durchtrittsöffnung und/oder zum Verringern einer Breite der Durchtrittsöffnung in wenigstens einem in die Längsrichtung an die Stützeinrichtung angrenzenden Bereich der Durchtrittsöffnung vorgesehen. Beispielsweise kann mittels entsprechender Schieber, Greifelemente oder dergleichen bewirkt werden, dass die Durchtrittsöffnung in dem an die Stützeinrichtung angrenzenden Bereich geschlossen oder nahezu geschlossen ist. Dann ist in dem Verkleidungselement kein durchgängiges Langloch vorgesehen, sondern das Verkleidungselement verbleibt um die Stützeinrichtung herum besonders weitgehend geschlossen, unabhängig davon, ob das Sitzteil und die Lehne gerade in Längsrichtung entlang der wenigstens einen Schiene nach vorne oder nach hinten verfahren ist. Dadurch kann insbesondere verhindert werden, dass Gegenstände in den Bereich der wenigstens einen Schiene gelangen. Des Weiteren wird so eine Verschmutzung von Komponenten insbesondere der ersten Verstelleinrichtung und/oder der zweiten Verstelleinrichtung vermieden.

Die Stützeinrichtung kann mittig zwischen zwei Schienen angeordnet sein, entlang welcher das Sitzteil in die Längsrichtung verfahrbar ist.

Vorzugsweise ist das Kraftfahrzeug wahlweise in einem manuellen Fahrmodus oder einem autonomen Fahrmodus betreibbar. Im autonomen Fahrmodus führt bevorzugt wenigstens eine Steuerungseinrichtung des Kraftfahrzeugs selbstständig Beschleunigungen und/oder Verzögerungen und/oder Spurwechsel und/oder Fahrtrichtungsänderungen oder dergleichen durch. Insbesondere beim pilotierten Fahren, also im autonomen Fahrmodus des Kraftfahrzeugs, ist es für den Sitzinsassen besonders hilfreich, wenn durch Verfahren des Sitzteils in die Längsrichtung und Drehen des Sitzteils um die Hochachse eine für den Sitzinsassen sehr komfortable Position eingenommen werden kann.

Vorzugsweise ist zumindest das Sitzteil, insbesondere jedoch das Sitzteil und die Lehne, elektromotorisch aus einer Stellung für den manuellen Fahrmodus in wenigstens eine Stellung für den autonomen Fahrmodus und zurück verstellbar. Denn durch den Einsatz von Elektromotoren als Komponenten der Verstelleinrichtungen lässt sich das rasche Erreichen der Normalposition des Fahrzeugsitzes, also der für den manuellen Fahrmodus vorgesehenen Position, besonders einfach sicherstellen. Dies ist dann von Vorteil, wenn der Sitzinsasse in dem Kraftfahrzeug, welches gerade in dem autonomen Fahrmodus betrieben wird, die Steuerung des Kraftfahrzeugs wieder selbst übernehmen soll oder übernehmen möchte.

Vorzugsweise ist der Fahrzeugsitz als Fahrersitz des Kraftfahrzeugs ausgebildet. Jedoch ist es auch bei einem als Beifahrersitz und/oder bei einem als Fahrzeugsitz einer von der vordersten Sitzreihe verschiedenen Sitzreihe vorteilhaft, wenn dieser sowohl entlang der Schiene in die Längsrichtung des Kraftfahrzeugs verfahrbar ist als auch um die Hochachse drehbar ist.

Im Folgenden ist ein Ausführungsbeispiel der Erfindung beschrieben. Hierzu zeigt:
- Fig. 1: schematisch einen als Fahrersitz ausgebildeten Fahrzeugsitz eines Kraftfahrzeugs, bei welchem sich Schienen, entlang welcher ein Sitzteil und eine Lehne des Fahrzeugsitzes in Längsrichtung des Kraftfahrzeugs verstellt werden können, unterhalb eines Teppichs des Kraftfahrzeugs befinden;
- Fig. 2: in einer Perspektivansicht die beiden Schienen, welche auf rampenförmigen Trägerteilen angeordnet sind, sowie eine Sitzschale eines Sitzteils des Kraftfahrzeugs, welche um eine Hochachse des Fahrzeugsitzes drehbar ist;
- Fig. 3: in einer Querschnittansicht Komponenten des Fahrzeugsitzes gemäß Fig. 1; und
- Fig. 4: in einer Längsschnittansicht Komponenten des Fahrzeugsitzes gemäß Fig. 1.

Bei dem im Folgenden erläuterten Ausführungsbeispiel handelt es sich um eine bevorzugte Ausführungsform der Erfindung. Bei dem Ausführungsbeispiel stellen die beschriebenen Komponenten der Ausführungsform jeweils einzelne, unabhängig voneinander zu betrachtende Merkmale der Erfindung dar, welche die Erfindung jeweils auch unabhängig voneinander weiterbilden und damit auch einzeln oder in einer anderen als der gezeigten Kombination als Bestandteil der Erfindung anzusehen sind. Des Weiteren ist die beschriebene Ausführungsform auch durch weitere der bereits beschriebenen Merkmale der Erfindung ergänzbar.

In den Figuren sind funktionsgleiche Elemente jeweils mit denselben Bezugszeichen versehen.

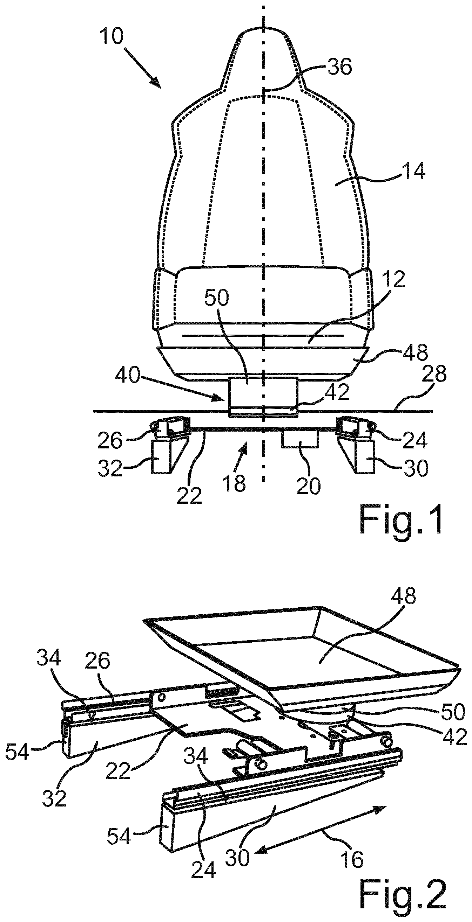

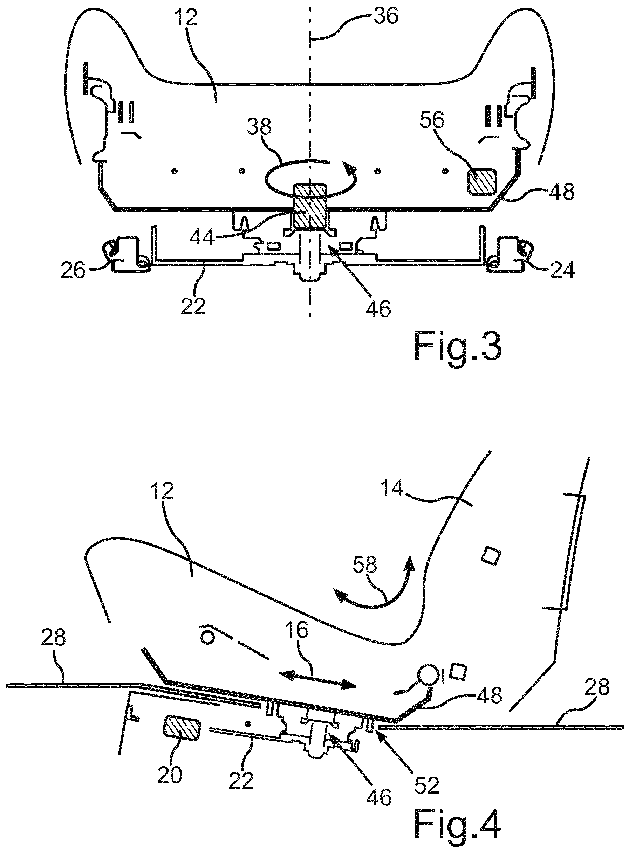

Ein Fahrzeugsitz 10, welcher in einem (nicht gezeigten) Kraftfahrzeug angeordnet ist, ist in Fig. 1 in einer schematischen Frontalansicht gezeigt. Der Fahrzeugsitz 10 umfasst ein Sitzteil 12 und eine Lehne 14. Zum Verstellen des Sitzteils 12 und der Lehne 14 in Längsrichtung 16 des Kraftfahrzeugs, welche in Fig. 2 und in Fig. 4 durch einen jeweiligen Doppelpfeil veranschaulicht ist, weist der Fahrzeugsitz 10 eine erste Verstelleinrichtung 18 auf. Die erste Verstelleinrichtung 18 umfasst einen Antrieb in Form eines Elektromotors 20 (vergleiche Fig. 4). Die von dem Elektromotor 20 bereitgestellte Antriebsleistung kann etwa über eine Spindel in die Bewegung des Sitzteils 12 und der Lehne 14 in die Längsrichtung 16 umgesetzt werden. Auf diese oder eine andere Art und Weise bewirkt der Elektromotor 20 das Verfahren einer Tragplatte 22 der ersten Verstelleinrichtung 18 entlang zweier Schienen 24, 26 (vergleiche Fig. 2).

Vorliegend sind der Elektromotor 20, die Tragplatte 22 und die Schienen 24, 26 unterhalb eines Verkleidungselements in Form eines Teppichs 28 angeordnet (vergleiche Fig. 4). Mittels des Teppichs 28 ist ein Boden des Kraftfahrzeugs verkleidet. Auf dem Boden des Kraftfahrzeugs sind zwei rampenförmige Trägerteile 30, 32 angeordnet, welche zu einem Heck des Kraftfahrzeugs hin abfallen. Die beiden Schienen 24, 26 sind auf einer jeweiligen Oberseite 34 der rampenförmigen Trägerteile 30, 32 angeordnet.

Das Sitzteil 12 und die Lehne 14 sind des Weiteren um eine Hochachse 36 des Fahrzeugsitzes 10 drehbar. Eine Drehbewegung um die Hochachse 36 ist in Fig. 3 durch einen weiteren Pfeil 38 veranschaulicht. Zum Drehen des Sitzteils 12 und der Lehne 14 um die Hochachse 36 ist eine zweite Verstelleinrichtung 40 vorgesehen, welche eine Drehscheibe 42 (vergleiche Fig. 2) und einen Antrieb in Form eines weiteren Elektromotors 44 umfasst (vergleiche Fig. 3). Des Weiteren umfasst die zweite Verstelleinrichtung 40 eine Getriebeeinrichtung 46 (vergleiche Fig. 3). Das Vorsehen der zweiten Verstelleinrichtung 40 zum Drehen des Sitzteils 12 und der Lehne 14 um die Hochachse 36 erfordert zusätzlichen Bauraum unterhalb einer Tragstruktur in Form einer Sitzschale 48 des Sitzteils 12. Vorliegend ist jedoch vermieden, dass sich das Sitzteil 12 in einem zu großen Abstand von dem Teppich 28 befindet. Denn sowohl die Schienen 24, 26 als auch die erste Verstelleinrichtung 18 sind in Richtung der Hochachse 36 unterhalb des Teppichs 28 angeordnet. Das Sitzteil 12 und die Lehne 14 sind also bezogen auf den Teppich 28 nicht unerwünscht stark erhöht angebracht.

Die Schienen 24, 26 zum Längsverstellen des Sitzteils 12 und der Lehne 14 sind vielmehr unterhalb des Teppichs 28 integriert. Dadurch wird das Sitzteil 12 nicht höher als bisher im Hinblick auf den Abstand des Sitzteils 12 zum Teppich 28 verbaut. Der Drehteller beziehungsweise die Drehscheibe 42 und der Elektromotor 44 für die Drehung des Sitzteils 12 und der Lehne 14 sind direkt unterhalb des Sitzteils 12 angeordnet. Eine Höhenverstellung des Sitzteils 12 ist zudem ermöglicht, indem die Tragplatte 22, auf welcher sich eine vorliegend zylinderförmige Stützeinrichtung 50 befindet (vergleiche Fig. 1), entlang der Schienen 24, 26 in die Längsrichtung 16 verfahren wird. Die zylinderförmige Stützeinrichtung 50 und die Drehscheibe 42 sind vorliegend vergleichsweise groß ausgebildet, sodass eine sichere Abstützung des Sitzteils 12 erreicht ist. Beispielsweise kann ein Durchmesser der Stützeinrichtung 50 bei etwa 150 Millimetern liegen.

Die Stützeinrichtung 50, welche den Unterbau der Schienen 24, 26 ermöglicht, tritt durch eine Durchtrittsöffnung 52 hindurch, welche in dem Teppich 28 ausgebildet ist (vergleiche Fig. 4). Hierbei sorgen bevorzugt Schieber, Greifer oder dergleichen Einrichtungen dafür, dass dann, wenn die vorliegend vergleichsweise breite Stützeinrichtung 50 in die Längsrichtung 16 verfahren wird, an die Stützeinrichtung 50 angrenzende Bereiche der Durchtrittsöffnung 52 mit dem Teppich 28 verschlossen sind.

Insbesondere der Elektromotor 20 für die Längsverstellung des Sitzteils 12 zusammen mit der Lehne 14 ist vorliegend unterhalb des Teppichs 28 verbaut und befindet sich somit nicht im Sichtbereich.

Vorliegend ist die Lehne 14 in einer unveränderbaren Winkelstellung bezogen auf das Sitzteil 12 an dem Sitzteil 12 festgelegt. Mit anderen Worten wird vorliegend die Lehne 14, welche in einer Normalstellung des Fahrzeugsitzes 10 eine bestimmte Neigung bezogen auf die Hochachse 36 aufweist, in dieser Neigung zusammen mit dem Sitzteil 12 nach vorne oder nach hinten verfahren. Ein Strukturteil beziehungsweise Strukturelement der Lehne 14 kann hierfür mit einem Strukturelement des Sitzteils 12 wie beispielsweise der Sitzschale 48 durch Schweißen verbunden sein. Durch die Keilform beziehungsweise Rampenform der Trägerteile 30, 32 (vergleiche Fig. 2) werden somit das nach hinten geneigte Sitzteil 12 und die nach hinten geneigte Lehne 14 zugleich nach vorne und nach oben verfahren, wenn die Tragplatte 22 mittels des Elektromotors 20 nach vorne verfahren wird.

In analoger Weise ändern sich die Höhe des Sitzteils 12 über dem Teppich 28 und der Abstand des Sitzteils 12 von einem jeweiligen vorderen Ende 54 der Trägerteile 30, 32 beziehungsweise der Schienen 24, 26 (vergleiche Fig. 2) gleichzeitig, wenn das Sitzteil 12 zusammen mit der Lehne 14 nach hinten, also hin zu einem Heck des Kraftfahrzeugs, verfahren wird. Es wird also bevorzugt eine Schalenstruktur analog einer Rennschale bei der Längsverstellung in die Längsrichtung 16 verfahren.

Eine Neigung der Lehne 14 bezogen auf die Fahrzeughochachse kann in einer Normalposition beispielsweise bei etwa 25 Grad liegen. Dementsprechend ist auch das Sitzteil 12 bezogen auf die Horizontale nach hinten geneigt (vergleiche Fig. 4). Vorliegend ist eine weitere, dritte Verstelleinrichtung vorgesehen, mittels welcher sich die Lehne 14 und das Sitzteil 12 gemeinsam weiter aus dieser Ausgangsstellung oder Normalposition verkippen lassen, in welcher die Neigung der Lehne 14 bezogen auf die Vertikale beziehungsweise die Fahrzeughochachse etwa 25 Grad beträgt.

Diese weitere Verstelleinrichtung umfasst einen Elektromotor 56, welcher gemäß Fig. 3 im Bereich des Sitzteils 12 angeordnet ist. Die Kippbewegung der Lehne 14 zusammen mit dem Sitzteil 12 um eine Querachse, welche mittels des Elektromotors 56 bewirkt werden kann, ist in Fig. 4 durch einen weiteren Pfeil 58 veranschaulicht. Hierbei kann beispielsweise vorgesehen sein, dass die Lehne 14 und zusammen mit der Lehne 14 das Sitzteil 12 um bis zu 9 Grad weiter nach hinten verkippt werden kann. Dann beträgt die Neigung der Lehne 14 bezogen auf die Vertikale beziehungsweise die Fahrzeughochachse in dieser maximal weit verkippten Stellung beispielsweise 34 Grad. Die Lehne 14 kann also zusammen mit dem Sitzteil 12 wie bei einem Bürodrehstuhl weiter nach hinten verkippt werden. Zudem lassen sich das Sitzteil 12 und die Lehne 14 um die Hochachse 36 drehen, wie dies bei einem Bürodrehstuhl der Fall ist.

Der Fahrzeugsitz 10 ist insbesondere als Fahrersitz des Kraftfahrzeugs ausgebildet, wobei das Kraftfahrzeug bevorzugt sowohl in einem manuellen Fahrmodus als auch in einem autonomen Fahrmodus betrieben werden kann. Gerade im autonomen Fahrmodus des Kraftfahrzeugs ist es für den sich auf dem Fahrzeugsitz 10 befindenden Fahrzeuginsassen (insbesondere also für den Fahrer) wünschenswert, eine besonders entspannte Sitzposition einnehmen zu können. Hierfür können das Sitzteil 12 und die Lehne 14 entlang der Schienen 24, 26 maximal weit nach hinten verfahren werden. Durch die Festlegung der Lehne 14 an dem Sitzteil 12 in der unveränderbaren Winkelstellung der Lehne 14 bezogen auf das Sitzteil 12 bewirkt dann ein Verkippen der Lehne 14 und des Sitzteils 12 mittels der dritten Verstelleinrichtung um die Querachse weiter nach hinten (vergleiche Pfeil 58 in Fig. 4), dass zugleich mit dem Vergrößern der Lehnenneigung auch die Beine angenehm hoch gelagert werden. Die so erreichte Ruheposition ist für den Sitzinsassen besonders komfortabel.

Insbesondere kann vorgesehen sein, dass das Sitzteil 12 und die Lehne 14 lediglich dann um die Hochachse 36 gedreht werden können, wenn das Sitzteil 12 und die Lehne 14 einen vorbestimmten Abstand von dem vorderen Ende 54 der Schienen 24, 26 beziehungsweise der rampenförmigen oder keilförmigen Trägerteile 30, 32 aufweisen. Insbesondere kann der Fahrzeugsitz dann um die Hochachse 36 verdreht werden, wenn das Sitzteil 12 und die Lehne 14 maximal weit zurückgefahren sind. Wenn dann das Sitzteil 12 und die Lehne 14 zu einer (nicht gezeigten) Mittelkonsole des Kraftfahrzeugs verdreht werden, so ändern sich die Komfortflächen beziehungsweise Anlagenflächen für den Körper des Sitzinsassen nicht. Zudem wird die Sicherheitsfunktion eines Rückhaltesystems in Form eines Sicherheitsgurts in ergonomischer Hinsicht beibehalten. Bei dem als Gurtintegralsitz ausgebildeten Fahrzeugsitz 10 bleibt somit das Hauptrückhaltesystem ergonomisch gleich.

Mittels der Elektromotoren 20, 44, 48 kann jedoch bewirkt werden, dass das Sitzteil 12 zusammen mit der Lehne 14 sehr rasch wieder aus der zur Fahrzeugmitte beziehungsweise zur Mittelkonsole hin verdrehten und/oder weiter nach hinten verkippten Stellung wieder in die Normalposition zurückbewegt wird, in welcher der Sitzinsasse des Fahrzeugsitzes 10 beziehungsweise der Fahrer eine für die manuelle Steuerung des Kraftfahrzeugs geeignete Sitzposition einnimmt.

Insgesamt zeigt das Beispiel, wie durch die Erfindung ein drehbarer Sitz beziehungsweise Fahrzeugsitz 10 mit verdeckter Abdeckung von Schienen 24, 26 bereitgestellt werden kann.

## Patentansprüche

1. Kraftfahrzeug mit wenigstens einem Fahrzeugsitz (10), welcher ein Sitzteil (12), eine Lehne (14) und eine erste Verstelleinrichtung (18) umfasst, mittels welcher zumindest das Sitzteil (12) entlang wenigstens einer Schiene (24, 26) in Längsrichtung (16) des Kraftfahrzeugs verfahrbar ist, wobei der Fahrzeugsitz (10) eine zweite Verstelleinrichtung (40) zum Drehen zumindest des Sitzteils (12) um eine Hochachse (36) des Fahrzeugsitzes (10) umfasst, wobei die wenigstens eine Schiene (24, 26) in Richtung der Hochachse (36) unterhalb eines Verkleidungselements (28) angeordnet ist, mittels welchem ein Boden des Kraftfahrzeugs verkleidet ist, **dadurch gekennzeichnet, dass** die Lehne (14) in einer unveränderbaren Winkelstellung bezogen auf das Sitzteil (12) an dem Sitzteil (12) festgelegt ist, und dass eine Neigung des Sitzteils (12) zusammen mit der an dem Sitzteil (12) festgelegten Lehne (14) mittels einer weiteren Verstelleinrichtung (56) veränderbar ist.

2. Kraftfahrzeug nach Anspruch 1,
**dadurch gekennzeichnet, dass**
die erste Verstelleinrichtung (18) in Richtung der Hochachse (36) unterhalb des Verkleidungselements (28) angeordnet ist.

3. Kraftfahrzeug nach einem der vorhergehenden Ansprüche,
**dadurch gekennzeichnet, dass**
die zweite Verstelleinrichtung (40) einen Antrieb (44) und eine Getriebeeinrichtung (46) umfasst, wobei die Getriebeeinrichtung (46) der zweiten Verstelleinrichtung (40) in Richtung der Hochachse (36) zumindest teilweise unterhalb des Verkleidungselements (28) angeordnet ist.

4. Kraftfahrzeug nach einem der vorhergehenden Ansprüche,
**dadurch gekennzeichnet, dass**
die wenigstens eine Schiene (24, 26) auf einem rampenförmigen Trägerteil (30, 32) angeordnet ist, welches in die Längsrichtung (16) zu einem Heck des Kraftfahrzeugs hin abfällt.

5. Kraftfahrzeug nach einem der vorhergehenden Ansprüche,
**dadurch gekennzeichnet, dass**
das Sitzteil (12) nur dann mittels der zweiten Verstelleinrichtung (40) um die Hochachse (36) drehbar ist, wenn das Sitzteil (12) in die Längsrichtung (16) einen vorbestimmten Abstand von einem vorderen Ende der wenigstens eine Schiene (24, 26) aufweist.

6. Kraftfahrzeug nach einem der vorhergehenden Ansprüche,
**dadurch gekennzeichnet, dass**
die weitere Verstelleinrichtung (56) in Richtung der Hochachse (36) oberhalb des Verkleidungselements (28) angeordnet ist.

7. Kraftfahrzeug nach einem der vorhergehenden Ansprüche,
**dadurch gekennzeichnet, dass**
das Sitzteil (12) mittels der zweiten Verstelleinrichtung (40) aus einer Ausgangsstellung um die Hochachse (36) hin zu einer Mittelkonsole des Kraftfahrzeugs verdrehbar ist.

8. Kraftfahrzeug nach einem der vorhergehenden Ansprüche,
**dadurch gekennzeichnet, dass**
eine das Sitzteil (12) abstützende, insbesondere mittig zwischen zwei Schienen (24, 26) angeordnete, Stützeinrichtung (50) durch eine in dem Verkleidungselement (28) ausgebildete Durchtrittsöffnung (52) hindurchtritt, wobei Mittel zum Schließen der Durchtrittsöffnung (52) und/oder zum Verringern einer Breite der Durchtrittsöffnung (52) in wenigstens einem in die Längsrichtung (16) an die Stützeinrichtung (50) angrenzenden Bereich der Durchtrittsöffnung (52) vorgesehen sind.

9. Kraftfahrzeug nach einem der vorhergehenden Ansprüche,
**dadurch gekennzeichnet, dass**
das Kraftfahrzeug wahlweise in einem manuellen Fahrmodus oder in einem autonomen Fahrmodus betreibbar ist, wobei zumindest das Sitzteil (12) elektromotorisch aus einer Stellung für den manuellen Fahrmodus in wenigstens eine Stellung für den autonomen Fahrmodus und zurück verstellbar ist.

## Claims

1. Motor vehicle having at least one vehicle seat (10), which comprises a seat part (12), a backrest (14) and a first adjustment device (18), by means of which at least the seat part (12) is displaceable in the longitudinal direction (16) of the motor vehicle along at least one rail (24, 26), wherein the vehicle seat (10) comprises a second adjustment device (40) for rotating at least the seat part (12) about a vertical axis (36) of the vehicle seat (10),
wherein the at least one rail (24, 26) is arranged, in the direction of the vertical axis (36), beneath a lining element (28), by means of which a floor of the motor vehicle is lined, **characterised in that** the backrest (14) is fixed to the seat part (12) in an unalterable angular position relative to the seat part (12), and **in that** an inclination of the seat part (12), together with the backrest (14) that is fixed to the seat part (12), can be altered by means of a further adjustment device (56).

2. Motor vehicle according to claim 1,
**characterised in that**
the first adjustment device (18) is arranged, in the direction of the vertical axis (36), beneath the lining element (28).

3. Motor vehicle according to any one of the preceding claims,
**characterised in that**
the second adjustment device (40) comprises a drive (44) and a gear device (46), the gear device (46) of the second adjustment device (40) being arranged, in the direction of the vertical axis (36), at least partially beneath the lining element (28).

4. Motor vehicle according to any one of the preceding claims,
**characterised in that**
the at least one rail (24, 26) is arranged on a ramp-like support part (30, 32), which, in the longitudinal direction (16), declines towards a rear of the motor vehicle.

5. Motor vehicle according to any one of the preceding claims,
**characterised in that**
the seat part (12) can be rotated about the vertical axis (36) by the second adjustment device (40) only when the seat part (12) has a predetermined spacing in the longitudinal direction (16) from a front end of the at least one rail (24, 26).

6. Motor vehicle according to any one of the preceding claims,
**characterised in that**
the further adjustment device (56) is arranged, in the direction of the vertical axis (36), above the lining element (28).

7. Motor vehicle according to any one of the preceding claims,
**characterised in that**
the seat part (12) can be rotated about the vertical axis (36) by means of the second adjustment device (40) from a starting position towards a central console of the motor vehicle.

8. Motor vehicle according to any one of the preceding claims,
**characterised in that**
a support device (50) that supports the seat part (12), and in particular is arranged centrally between two rails (24, 26), protrudes through an opening (52) formed in the lining element (28), wherein means for closing the opening (52) and/or for reducing a width of the opening (52) are provided in at least one area of the opening (52) adjoining the support device (50) in the longitudinal direction (16).

9. Motor vehicle according to any one of the preceding claims,
**characterised in that**
the motor vehicle can be operated selectively in a manual driving mode or in an autonomous driving mode, wherein at least the seat part (12) can be adjusted by an electric motor from a position for the manual driving mode into at least one position for the autonomous driving mode, and back again.

## Revendications

1. Véhicule automobile avec au moins un siège de véhicule (10) qui comporte une partie de siège (12), un dossier (14) et un premier dispositif de réglage (18), au moyen duquel au moins la partie de siège (12) est déplaçable le long d'au moins un rail (24, 26) dans le sens longitudinal (16) du véhicule automobile, dans lequel le siège de véhicule (10) comporte un second dispositif de réglage (40) pour la rotation au moins de la partie de siège (12) autour d'un axe vertical (36) du siège de véhicule (10),
dans lequel l'au moins un rail (24, 26) est agencé en direction de l'axe vertical (36) en dessous d'un élément de revêtement (28), au moyen duquel un sol du véhicule automobile est revêtu, **caractérisé en ce que** le dossier (14) est fixé à la partie de siège (12) dans une position angulaire non modifiable par rapport à la partie de siège (12), et qu'une inclinaison de la partie de siège (12) est modifiable conjointement avec le dossier (14) fixé à la partie de siège (12) au moyen d'un autre dispositif de réglage (56).

2. Véhicule automobile selon la revendication 1,
**caractérisé en ce que**
le premier dispositif de réglage (18) est agencé en direction de l'axe vertical (36) en dessous de l'élément de revêtement (28).

3. Véhicule automobile selon l'une quelconque des revendications précédentes, **caractérisé en ce que**
le second dispositif de réglage (40) comporte un entraînement (44) et un dispositif d'engrenage (46), dans lequel le dispositif d'engrenage (46) du second dispositif de réglage (40) est agencé en direction de l'axe vertical (36) au moins partiellement en dessous de l'élément de revêtement (28).

4. Véhicule automobile selon l'une quelconque des revendications précédentes, **caractérisé en ce que**
l'au moins un rail (24, 26) est agencé sur une partie de support (30, 32) en forme de rampe qui diminue dans le sens longitudinal (16) vers une partie arrière du véhicule automobile.

5. Véhicule automobile selon l'une quelconque des revendications précédentes, **caractérisé en ce que**
la partie de siège (12) est rotative seulement au moyen du second dispositif de réglage (40) autour de l'axe vertical (36), lorsque la partie de siège (12) présente dans le sens longitudinal (16) une distance prédéterminée par rapport à une extrémité avant de l'au moins un rail (24, 26).

6. Véhicule automobile selon l'une quelconque des revendications précédentes, **caractérisé en ce que**
l'autre dispositif de réglage (56) est agencé en direction de l'axe vertical (36) au-dessus de l'élément de revêtement (28).

7. Véhicule automobile selon l'une quelconque des revendications précédentes, **caractérisé en ce que**
la partie de siège (12) est rotative au moyen du second dispositif de réglage (40) d'une position de départ autour de l'axe vertical (36) vers une console médiane du véhicule automobile.

8. Véhicule automobile selon l'une quelconque des revendications précédentes, **caractérisé en ce que**
un dispositif d'appui (50) soutenant la partie de siège (12), agencé en particulier au milieu entre deux rails (24, 26) traverse une ouverture de passage (52) réalisée dans l'élément de revêtement (28), dans lequel des moyens de fermeture de l'ouverture de passage (52) et/ou de diminution d'une largeur de l'ouverture de passage (52) sont prévus dans au moins une zone contiguë au dispositif d'appui (50) dans le sens longitudinal (16) de l'ouverture de passage (52).

9. Véhicule automobile selon l'une quelconque des revendications précédentes, **caractérisé en ce que**
le véhicule automobile peut fonctionner au choix dans un mode de déplacement manuel ou dans un mode de déplacement autonome, dans lequel au moins la partie de siège (12) est réglable par voie électromotorisée d'une position pour le mode de déplacement manuel dans au moins une position pour le mode de déplacement autonome et inversement.
